# EUROPÄISCHE PATENTANMELDUNG

(11) **EP 3 165 958 A1**
(43) Veröffentlichungstag der Anmeldung: **10.05.2017**
(21) Anmeldenummer: 16195539.8
(22) Anmeldetag: 25.10.2016
(51) Int. Cl.: G02B 26/10, G01S 17/42

(54) **SCANVORRICHTUNG**

(30) Priorität: 03.11.2015 DE 102015118822
(71) Anmelder: SICK AG, 79183 Waldkirch/Breisgau (DE)
(72) Erfinder: Nübling, Ralf Ulrich, 79211 Denzlingen (DE)
(74) Vertreter: Manitz Finsterwald Patentanwälte PartmbB

(57) **Zusammenfassung**

Die Erfindung betrifft eine Scanvorrichtung zur Inspektion eines dreidimensionalen Raumbereiches, mit einer Lichtquelle zum Aussenden von Sendelichtstrahlung in den dreidimensionalen Raumbereich und einer Empfangsvorrichtung zum Empfangen von aus dem dreidimensionalen Raumbereich zurückreflektierten oder zurückremittierten Empfangslichtes, einer Ablenkeinrichtung zur Ablenkung der Sendelichtstrahlung in den dreidimensionalen Raumbereich und zur Ablenkung des Empfangslichtes zu der Empfangsvorrichtung. Die Ablenkeinrichtung ist unter einem Achswinkel schräg zu einer ersten Rotationsachse und um die erste Rotationsachse mit einem ersten Antrieb drehbar angeordnet, so dass die Sendelichtstrahlung einen um diese erste Rotationsachse angeordneten Winkelbereich überstreicht. Erfindungsgemäß ist die erste Rotationsachse unter einem zweiten Achswinkel schräg zu einer zweiten Rotationsachse und um diese mit einem zweiten Antrieb drehbar angeordnet.

## Beschreibung

Die Erfindung betrifft eine Scanvorrichtung zur Inspektion eines dreidimensionalen Raumbereiches, mit einer Lichtquelle zum Aussenden von Sendelichtstrahlung in den dreidimensionalen Raumbereich und einer Empfangsvorrichtung zum Empfangen von aus dem dreidimensionalen Raumbereich zurückreflektierten oder zurückremittierten Empfangslichtes, einer Ablenkeinrichtung zur Ablenkung der Sendelichtstrahlung in den dreidimensionalen Raumbereich und zur Ablenkung des Empfangslichtes zu der Empfangsvorrichtung, wobei die Ablenkeinrichtung unter einem Achswinkel schräg zu einer ersten Rotationsachse und um die erste Rotationsachse mit einem ersten Antrieb drehbar angeordnet ist, so dass die Sendelichtstrahlung einen um diese erste Rotationsachse angeordneten Winkelbereich überstreicht.

Scanvorrichtungen, insbesondere Laserscanner werden zum Beispiel eingesetzt, um Überwachungsräume abzuscannen. Der Sendelichtstrahl wird bei bekannten Scanvorrichtungen zum Beispiel über einen schräg stehenden Drehspiegel derart in den Überwachungsraum abgelenkt, dass mit der Drehung des Spiegels ein Winkelbereich, insbesondere 360°, überstrichen wird. Das Sendelicht trifft dabei in der Regel parallel zu der Rotationsachse auf den Drehspiegel. Befindet sich in dem so vom Lichtstrahl überstrichenen Winkelbereich zum Beispiel ein Objekt, so wird das Licht zurückreflektiert und von dem Drehspiegel in Richtung einer Empfangsvorrichtung, zum Beispiel einer Fotodiode oder eines Fotodiodenfeldes gelenkt. Insofern kann auf die Anwesenheit eines Objektes in dieser Winkelposition des reflektierten Lichtes geschlossen werden. Mit einer derartigen Scanvorrichtung kann also eine zweidimensionale Ebene überwacht werden.

Um einen dreidimensionalen Raum zu überwachen, müssen zum Beispiel mehrere Scanvorrichtungen eingesetzt werden, die unterschiedliche Ebenen im Raum auf diese Weise überwachen.

DE 297 24 806 U1 beschreibt eine Vorrichtung, bei der die abgetastete Ebene mit Hilfe einer entsprechenden Vorrichtung um eine zumindest im Wesentlichen in der oder parallel zur Abtastebene liegende Schwenkachse um einen vorgegebenen Schwenkwinkelbereich verschwenkbar ist. Die gesamte Vorrichtung wird also mit Hilfe einer externen Schwenkeinrichtung um eine Schwenkachse verschwenkt, die im Wesentlichen senkrecht zu der Drehachse des Drehspiegels ist.

DE 10 2008 032 216 A1 beschreibt eine Vorrichtung, bei der eine erste Ablenkeinrichtung den Sendelichtstrahl in einer ersten Ebene ablenkt. Die gesamte Ablenkeinrichtung, mit deren Hilfe die zweidimensionale Ebene abgescannt werden kann, wird um eine zweite Achse gedreht, die senkrecht zu der ersten Achse steht. Mit einer solchen Vorrichtung ist es möglich, einen halbkugelförmigen Halbraum zu überwachen.

Problematisch kann es dabei sein, dass das Licht bei kontinuierlicher Drehung des Drehspiegels nur in den Halbraum oberhalb der Vorrichtung gesendet werden kann. Wenn der Drehspiegel durch einen einfachen Drehantrieb betrieben werden soll, so bewegt sich der Lichtstrahl allerdings auch in einen Bereich außerhalb dieses Halbraums, zum Beispiel im Bereich der Mechanik zur Drehung der Anordnung um diejenige Achse, die senkrecht zur Achse des Drehspiegels angeordnet ist. Dabei kann es zum Beispiel zu unerwünschten Störreflexen kommen.

Der Erfindung liegt die Aufgabe zugrunde, eine möglichst einfache Anordnung anzugeben, mit der ein großer Teil eines dreidimensionalen Raumbereiches beobachtet bzw. überwacht werden kann.

Diese Aufgabe wird mit einer Scanvorrichtung mit den Merkmalen des Anspruchs 1 gelöst.

Die erfindungsgemäße Scanvorrichtung weist eine Ablenkeinrichtung auf, die unter einem ersten Achswinkel schräg zu einer ersten Rotationsachse und um die erste Rotationsachse mit einem ersten Antrieb drehbar angeordnet ist, so dass die Sendelichtstrahlung einen um im diese erste Rotationsachse angeordneten Winkelbereich überstreicht. Die erste Rotationsachse ist bei der erfindungsgemäßen Scanvorrichtung unter einem zweiten Achswinkel schräg zu einer raumfesten zweiten Rotationsachse und um diese mit einem zweiten Antrieb drehbar angeordnet. Die Drehung um die erste Rotationsachse bewirkt also eine Ablenkung des Sendelichtes in eine Fläche. Die zweite Rotationsachse steht schräg auf der ersten Rotationsachse. Eine Drehung um die zweite Rotationsachse bewirkt also eine Bewegung dieser Fläche, die ähnlich einer Taumelscheibe ist. Die Fläche wird also in schräger Ausrichtung zur zweiten Rotationsachse um diese gedreht. Auf diese Weise wird ein dreidimensionaler Raumbereich vollständig überstrichen.

Der verwendete Begriff "schräg" ist dabei so zu verstehen, dass der jeweilige Achswinkel weder 0° noch 90° betragen soll. Bevorzugt sind der erste Achswinkel und/oder der zweite Achswinkel im Bereich von jeweils 30 bis 60°, besonders bevorzugt im Wesentlichen jeweils gleich 45°. Die Sendelichtstrahlung kann hier elektromagnetische Strahlung insbesondere im sichtbaren, im ultravioletten oder infraroten Spektralbereich umfassen.

Eine solche Winkelausrichtung, insbesondere unter Zugrundelegung von Achswinkeln von jeweils 45°, ermöglicht eine Überwachung eines regelmäßigen und symmetrischen Überwachungsbereiches und ist einfach zu realisieren. Insbesondere, wenn der erste Achswinkel 45° beträgt, überstreicht die Sendelichtstrahlung nach der Ablenkung an der Ablenkeinrichtung eine zweidimensionale Ebene, die sich dann schräg im Raum um die zweite Rotationsachse dreht.

Die erfindungsgemäße Ablenkeinrichtung kann insbesondere bei einer einfachen Ausgestaltung durch einen entsprechend angeordneten Drehspiegel gebildet sein.

Die erfindungsgemäße Scanvorrichtung stellt bei Verwendung einer Laserlichtquelle, zum Beispiel einer Laserdiode, einen Laserscanner dar.

Die erfindungsgemäße Scanvorrichtung dient zur Inspektion eines dreidimensionalen Raumbereiches. Damit soll ausgesagt werden, dass eine solche Scanvorrichtung zum Beispiel zur Beobachtung oder Überwachung eines solchen dreidimensionalen Raumbereiches eingesetzt werden kann. Außerdem kann eine erfindungsgemäße Scanvorrichtung auch derart ausgestaltet sein, dass sie in ansonsten bekannter Weise Objekte in dem dreidimensionalen Raumbereich detektiert oder vermisst.

Um die Winkelposition eines Objektes in der Ebene, die durch die Drehung um die erste Rotationsachse abgescannt wird, und die Winkelposition der Ebene, die sich aus der Drehung um die zweite Rotationsachse ergibt, erfassen zu können, können entsprechende Winkelmesseinrichtungen an den Antrieben zur Drehung um die erste bzw. um die zweite Rotationsachse vorgesehen sein. Entsprechende Messvorrichtungen können zum Beispiel an sich bekannte Encoder zur Feststellung der Drehwinkelposition sein.

Um auch den Abstand eines Objektes im Überwachungsraum feststellen zu können, wird zum Beispiel die Lichtlaufzeit eines Lichtpulses von der Scanvorrichtung zu einem reflektierenden oder remittierenden Objekt und wieder zurück ausgemessen. Aus dieser Laufzeit lässt sich mit Hilfe der Lichtgeschwindigkeit der Abstand berechnen (time-of-flight-Methode, TOF). Alternativ kann moduliertes Sendelicht verwendet werden und die Phasenverschiebung des reflektierten bzw. remittierten Lichtes zur Bestimmung der Lichtlaufzeit verwendet werden.

Aus dem Abstand eines Objektes und den erwähnten Winkelpositionen lässt sich dann mit Hilfe einer entsprechend ausgestalteten Auswerteeinheit die Position eines reflektierenden oder remittierenden Objektes in dem dreidimensionalen Überwachungsraum bestimmen. Dazu kann eine Auswerteeinheit vorgesehen sein, die mit der Empfangseinrichtung der Scanvorrichtung und den Winkelmesseinrichtungen in entsprechender Weise verbunden ist, um deren Signale wie beschrieben auswerten zu können.

Um die beweglichen Teile der Scanvorrichtung zu schützen, kann ein Gehäuse vorgesehen sein, das die Scanvorrichtung zumindest teilweise umgibt und zumindest in dem Bereich, der von dem durch die Ablenkvorrichtung abgelenkten Sendelichtstrahl überstrichen wird, für die verwendete Strahlung transparent ist.

Um Störlichtreflexe wirksam abschirmen zu können, kann es vorteilhaft sein, wenn eine rohrförmige Abschirmung vorgesehen ist, die sich ausgehend von der Ablenkeinrichtung entlang des Strahlenganges der abgelenkten Sendelichtstrahlung erstreckt und sich fest mit der Ablenkeinrichtung bewegt. Diese rohrförmige Abschirmung umgibt also den Sendelichtstrahl, nachdem dieser von der Ablenkeinrichtung in den dreidimensionalen Raum abgelenkt worden ist. Eine solche rohrförmige Abschirmung, die sich mit der Ablenkeinrichtung bewegt, wirkt dementsprechend wie eine Kanaltrennung, die den Sendelicht-"kanal" umgibt und verhindert, dass Sendelicht durch Reflexionen an einem anderen Element, z.B. einer Frontscheibe, die Messung verfälscht.

Besonders vorteilhaft und sicher ist eine solche Kanaltrennvorrichtung, wenn sich die entsprechende rohrförmige Abschirmung so nah wie möglich bis an die Innenwandung eines für die zum Einsatz kommende Strahlung transparenten Gehäuses erstreckt, wie es oben für eine besondere Ausführungsform erwähnt ist.

Durch die besonders gewählte Geometrie mit einer ersten Rotationsachse, die um einen Achswinkel gegenüber der zweiten Rotationsachse verkippt ist, ist dabei gewährleistet, dass diese als Rohr ausgestaltete Kanaltrennvorrichtung nicht in ihrer Bewegung durch andere Elemente der Scanvorrichtung behindert wird. Bei einer Anordnung, bei der die Rotationsachsen im 90°-Winkel zueinander angeordnet wären, würde hingegen eine solche Kanaltrennvorrichtung bei der Drehung um die eine Rotationsachse von dem Antrieb zur Drehung um die der andere Rotationsachse behindert werden.

Vorteilhafterweise sind die Geschwindigkeiten der beiden Antriebe und damit die Drehgeschwindigkeiten um die erste und zweite Rotationsachse unterschiedlich. Besonders bevorzugt ist die Geschwindigkeit des ersten Antriebes und damit die Drehgeschwindigkeit um die erste Rotationsachse höher als die Geschwindigkeit des zweiten Antriebes und damit die Drehgeschwindigkeit um die zweite Rotationsachse.

Bei einer besonderen Ausführungsform werden für einen oder beide Antriebe Dünnringlagermotoren eingesetzt, die besonders kompakt und leicht sind, so dass die bewegten Massen gering gehalten werden können. In spezieller Ausgestaltung kann ein solcher Motor auch als Platinenmotor ausgelegt sein.

Die Erfindung wird anhand der beiliegenden Figuren im Detail erläutert, die Detailansichten einer erfindungsgemäßen Ausführungsform in unterschiedlichen Perspektiven zeigen. Dabei zeigen
- Fig. 1: eine teilweise aufgerissene Ansicht einer Ausführungsform einer erfindungsgemäßen Scanvorrichtung in einer ersten Perspektive,
- Fig. 2: eine teilweise aufgerissene Ansicht dieser Ausführungsform in einer zweiten Perspektive,
- Fig. 3: eine teilweise aufgerissene Ansicht dieser Ausführungsform in einer dritten Perspektive, und
- Fig. 4: eine Teilansicht wesentlicher Teile der gezeigten Ausführungsform.

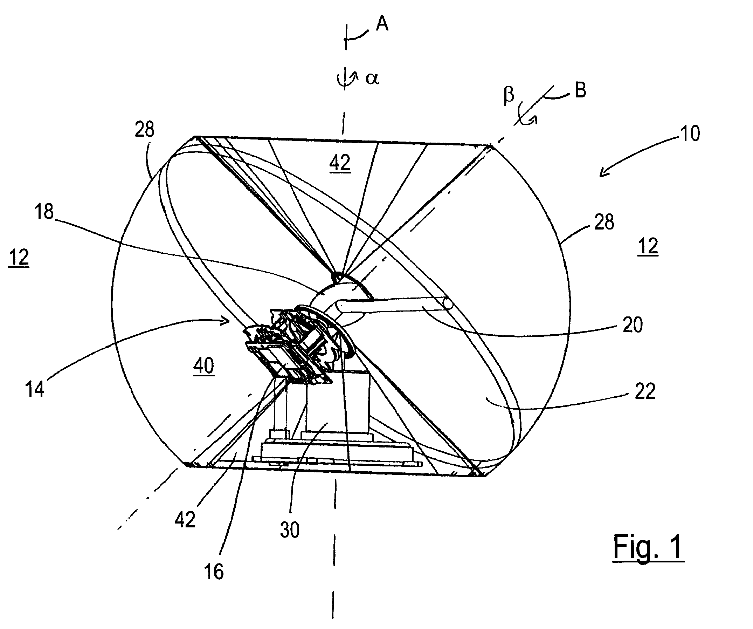

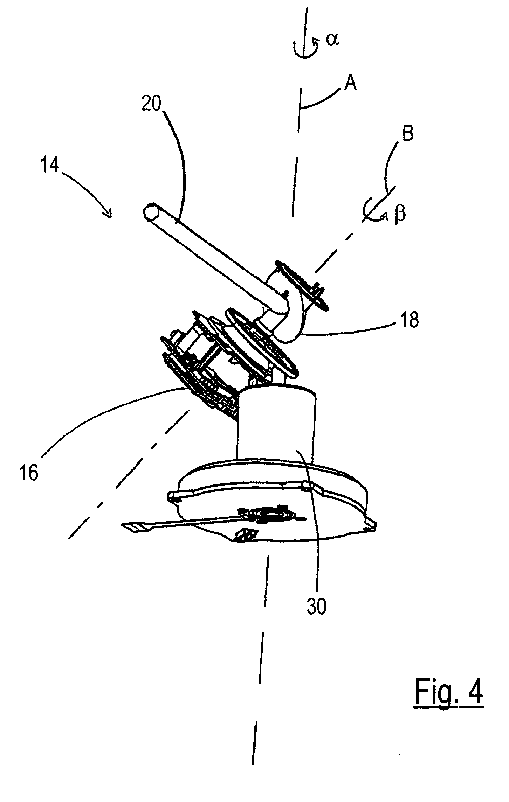

Die Figuren zeigen die für die Erfindung wesentlichen Teile einer Ausführungsform einer erfindungsgemäßen Scanvorrichtung. Dabei zeigen Fig. 1 bis 3 unterschiedliche Perspektivansichten in teilweise aufgerissener Darstellung. Fig. 4 zeigt eine Detailansicht, die sich im Wesentlichen auf die beweglichen Teile konzentriert.

Die Scanvorrichtung ist mit 10 bezeichnet. Abgescannt und insofern überwacht werden kann damit ein Erfassungsbereich 12. Eine Scaneinheit 14 umfasst eine Sende- und Empfangseinheit 16, die zum einen eine Sendelichtquelle, zum Beispiel eine Laserdiode aufweist. Licht dieser Laserdiode wird in Richtung eines Ablenkspiegels 18 gesendet, der mit einer entsprechenden Antriebseinrichtung, die ebenfalls in der Sende- und Empfangseinheit angeordnet ist, um die erste Rotationsachse B gedreht werden kann. Das Licht fällt hier entlang der Rotationsachse B auf den Drehspiegel. Die Drehung des Spiegels 18 um die Rotationsachse B ist durch den Drehwinkel β angedeutet. Gegenüber dieser Rotationsachse B ist der Spiegel 18 bei der beschriebenen Ausführungsform um 45° geneigt, so dass die Strahlung um 90° abgelenkt wird. Sie tritt durch ein Abschirmrohr 20 nach außen. Durch die Drehung des Spiegels 18 um die Rotationsachse B dreht sich das Abschirmrohr 20 entlang einer Ebene 22, die in Fig. 1 schematisch dargestellt ist. Das Rohr 20 erstreckt sich nahezu bis zu einer Frontscheibe 28, die zum Beispiel als Haube ausgestaltet sein kann, die zumindest in dem Bereich, in dem sie kugelsegmentförmig ist, für die verwendete Lichtstrahlung transparent ist. Das Abschirmrohr 20 kann sich dabei bis auf wenige Millimeter an die transparente Frontscheibe 28 annähern.

Die gesamte beschriebene Scaneinheit 14 ist um eine raumfeste zweite Rotationsachse A drehbar angeordnet und wird zu dieser Drehbewegung von einem Motor 30 angetrieben. Diese Drehung ist durch den Drehwinkel α angedeutet. Auf diese Weise dreht sich die gesamte Ebene 22 um die Rotationsachse A innerhalb der Frontscheibe 28. Die Rotationsachse B steht bei der beschriebenen Ausführungsform in einem Winkel von 45° zu der Rotationsachse A. Innerhalb der Frontscheibe 28 wird durch die Bewegung um die Rotationsachsen A und B erreicht, dass das Abschirmrohr 20 und insofern die Sendelichtstrahlung, die von dem Spiegel 18 reflektiert wird, den Bereich 40 durchläuft. Die gesamte teilkugelförmige, um die Rotationsachse A rotationssymmetrische Frontscheibe wird also bei der gezeigten Ausführungsform von dem Sendelicht überstrichen.

Das Sendelicht tritt durch die Frontscheibe 28 aus und überstreicht den Erfassungsbereich 12.

Bis auf die kegelförmigen Bereiche 42 wird also der gesamte Raum um die Scanvorrichtung 10 von Sendelicht überstrichen. Die nicht überstrichenen Bereiche 42 umfassen dabei zwei kegelförmige Bereiche, die rotationssymmetrisch um die Rotationsachse A angeordnet sind. Im unteren ausgesparten kegelförmigen Bereich 42 befindet sich die Halterung für die Vorrichtung und der Antriebsmotor 30 zur Bewegung um die Rotationsachse A.

Befindet sich in dem Raum 12 ein reflektierendes oder remittierendes Objekt, so wird das Sendelicht durch die Frontscheibe 28 als Empfangslicht wieder zurück auf den Spiegel 18 gelenkt. Von diesem wird es um 90° in Richtung der Sende-/Empfangseinrichtung 16 abgelenkt.

Die Sende-/Empfangseinrichtung 16 ist dabei so ausgestaltet, dass sie moduliertes Sendelicht aussendet und die Phasenverschiebung des Empfangslichtes feststellen kann, die durch die Laufzeit des Lichtes bis zum reflektierenden bzw. remittierenden Objekt und wieder zurück bewirkt wird. Alternativ kann die Laufzeit von Lichtpulsen ausgewertet werden. So kann der Abstand des reflektierenden oder remittierenden Objektes von der Scanvorrichtung 10 bestimmt werden. Eine genaue Feststellung der Lage eines Objektes im Erfassungsraum 12 ist damit möglich. Die Winkelpositionen um die Rotationsachsen A und B werden dazu zum Beispiel mit an sich bekannten Winkelencodern bestimmt.

Die Antriebseinrichtung, die zur Bewegung des Ablenkspiegels 18 um die Rotationsachse B zum Einsatz kommt, und die Antriebseinrichtung 30, mit der die erste Scaneinrichtung 14 um die Rotationsachse A gedreht wird, können jeweils Dünnringlagermotoren umfassen, die als Platinenmotoren ausgestaltet sein können. Derartige Motoren sind sehr kompakt und flach bauend und ermöglichen die direkte Übertragung von Energie und Signalen zwischen zwei sich gegeneinander drehenden Elementen.

Durch die besondere Anordnung und die Drehung um die beiden schräg zueinander stehenden Rotationsachsen A und B ist zudem gewährleistet, dass das Abschirmrohr 20 sich bis nahezu zur Frontscheibe 28 erstrecken kann, ohne während des Scanbetriebes mit anderen Elementen der Scanvorrichtung 10 zu kollidieren, also insbesondere nicht mit dem Motor 30 und den notwendigen Halterungen.

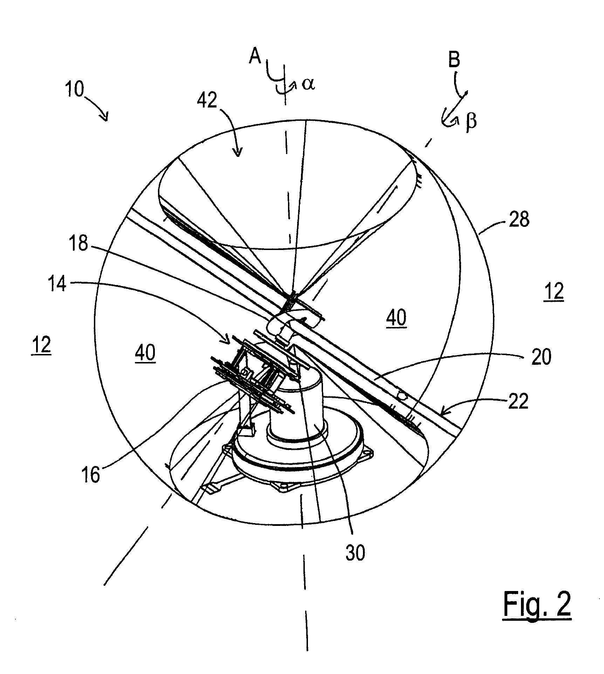

Während Fig. 1 eine Perspektive von der Seite zeigt, blickt man bei der Ansicht der Fig. 2 von schräg oben auf die Scanvorrichtung 10. Hier ist eine Perspektive zum gleichen Zeitpunkt wie in Fig. 1 dargestellt, wobei hier der Blickwinkel gerade in der Ebene 22 ist.

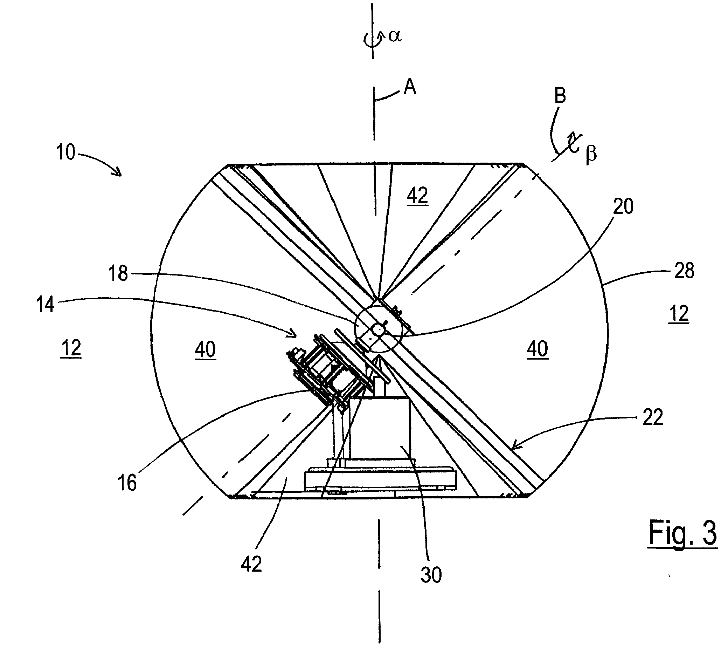

In Fig. 3 blickt man wieder seitlich auf die Scanvorrichtung 10, wobei man hier exakt in das Rohr 20 hineinblickt.

Fig. 4 zeigt das Detail der beweglichen Einheit 14.

Mit der erfindungsgemäßen Vorrichtung ist es also möglich, einen Großteil des dreidimensionalen Raumes abzuscannen und trotzdem ein Abschirmrohr 20 zur Kanaltrennung bis nahezu vollständig an die Innenfläche einer Frontscheibe 28 zu verwenden.

### Bezugszeichenliste

- 10: Scanvorrichtung
- 12: Erfassungsbereich
- 14: Scaneinheit
- 16: Sende-/Empfangseinrichtung
- 18: Ablenkspiegel
- 20: Kanaltrennungsrohr
- 22: Ebene
- 28: Frontscheibe
- 30: Antriebsmotor
- 40: überstrichener Bereich
- 42: nicht überstrichener Bereich
- A: zweite Rotationsachse
- B: erste Rotationsachse
- α, β: Drehwinkel

## Patentansprüche

1. Scanvorrichtung (10) zur Inspektion eines dreidimensionalen Raumbereiches (12), mit einer Lichtquelle zum Aussenden von Sendelichtstrahlung in den dreidimensionalen Raumbereich und einer Empfangsvorrichtung zum Empfang von aus dem dreidimensionalen Raumbereich zurückreflektierten oder zurückremittierten Empfangslichtes, einer Ablenkeinrichtung (18) zur Ablenkung der Sendelichtstrahlung in den dreidimensionalen Raumbereich und zur Ablenkung des Empfangslichtes zu der Empfangsvorrichtung, wobei die Ablenkeinrichtung (18) unter einem ersten Achswinkel schräg zu einer ersten Rotationsachse (B) und um die erste Rotationsachse mit einem ersten Antrieb drehbar angeordnet ist, so dass die Sendelichtstrahlung einen um diese erste Rotationsachse (B) angeordneten Winkelbereich überstreicht,
**dadurch gekennzeichnet, dass**
die erste Rotationsachse (B) unter einem zweiten Achswinkel schräg zu einer zweiten Rotationsachse (A) und um diese mit einem zweiten Antrieb (30) drehbar angeordnet ist.

2. Scanvorrichtung nach Anspruch 1,
**gekennzeichnet durch**
ein Gehäuse, das die Scanvorrichtung (10) umgibt und zumindest in dem von dem **durch** die Ablenkeinrichtung abgelenkten Sendelichtstrahl überstrichenen Bereich (28) für die Sendelichtstrahlung transparent ist.

3. Scanvorrichtung nach zumindest einem der vorstehenden Ansprüche,
**gekennzeichnet durch**
eine rohrförmige Abschirmung (20), die sich ausgehend von der Ablenkeinrichtung (18) entlang des Strahlenganges der abgelenkten Sendelichtstrahlung erstreckt und sich fest mit der Ablenkeinrichtung (18) um die erste Rotationsachse (B) dreht.

4. Scanvorrichtung nach den Ansprüchen 2 und 3,
**dadurch gekennzeichnet, dass**
das Gehäuse in dem durch die Ablenkeinrichtung abgelenkten Sendelichtstrahl überstrichenen Bereich (28) als Teilkugeloberfläche ausgestaltet ist und sich die rohrförmige Abschirmung (20) nahezu bis zur Innenfläche der Teilkugeloberfläche erstreckt, insbesondere so weit, dass der Abstand zwischen der rohrförmigen Abschirmung (20) und der Innenfläche der Teilkugeloberfläche so klein wie möglich ist, ohne dass eine Berührung der rohrförmigen Abschirmung (20) mit der Teilkugeloberfläche stattfindet.

5. Scanvorrichtung nach zumindest einem der vorstehenden Ansprüche,
**dadurch gekennzeichnet, dass**
der erste Achswinkel 45 Grad beträgt und/oder der zweite Achswinkel 45 Grad beträgt.

6. Scanvorrichtung nach zumindest einem der vorstehenden Ansprüche,
**gekennzeichnet durch**
Winkelmesseinrichtungen zur Erfassung des Drehwinkels (β) der Ablenkeinrichtung (18) um die erste Rotationsachse (B) und zur Erfassung des Drehwinkels (α) der ersten Rotationsachse (B) um die zweite Rotationsachse (A).

7. Scanvorrichtung nach zumindest einem der vorstehenden Ansprüche,
**dadurch gekennzeichnet, dass**
die Sendelichtstrahlung gepulst oder moduliert ausgesendet wird und aus der Zeitverzögerung des empfangenen Lichtpulses oder der Phasenverschiebung des Empfangslichtes gegenüber der modulierten Sendelichtstrahlung auf die Entfernung eines in dem dreidimensionalen Raum (12) befindlichen Objektes geschlossen wird, das die Sendelichtstrahlung zurückreflektiert oder zurückremittiert.

8. Scanvorrichtung nach den Ansprüchen 6 und 7,
**gekennzeichnet durch**
eine Auswerteeinheit, die derart ausgestaltet ist, dass sie unter Zugrundelegung der mit den Winkelmesseinrichtungen erfassten Drehwinkeln (α, β) und der Entfernung des Objektes auf die Position des Objektes im dreidimensionalen Raum (12) schließt.

9. Scanvorrichtung nach zumindest einem der vorstehenden Ansprüche,
**dadurch gekennzeichnet, dass**
der erste und/oder der zweite Antrieb (30) einen Dünnringlagermotor umfasst.
